# EUROPÄISCHE PATENTSCHRIFT

(11) **EP 2 334 734 B1**
(45) Veröffentlichungstag und Bekanntmachung des Hinweises auf die Patenterteilung: **05.09.2012**
(21) Anmeldenummer: 09744108.3
(22) Anmeldetag: 14.10.2009
(51) Int. Cl.: C08L 67/02, C08L 67/04

(54) **MISCHUNGEN ZUR HERSTELLUNG VON BIOLOGISCH ABBAUBAREN FORMKÖRPERN AUF BASIS VON ALIPHATISCHEN POLYESTERN UND IN WASSER REDISPERGIERBAREN POLYMERPULVERN**
MIXTURES FOR PRODUCING BIODEGRADABLE ALIPHATIC POLYESTER-BASED MOLDED BODIES AND FOR PRODUCING POLYMER POWDERS THAT CAN BE RE-DISPERSED IN WATER
MÉLANGES POUR LA PRODUCTION DE CORPS MOULÉS BIODÉGRADABLES, À BASE DE POLYESTERS ALIPHATIQUES ET DE POUDRES POLYMÈRES REDISPERSIBLES DANS L'EAU

(30) Priorität: 16.10.2008 DE 102008042893
(43) Veröffentlichungstag der Anmeldung: 22.06.2011
(73) Patentinhaber: Wacker Chemie AG, 81737 München (DE)
(72) Erfinder: PFAADT, Marcus, 84489 Burghausen (DE); TANGELDER, Robert, NL-1251 NR Laren (NL)
(74) Vertreter: Schuderer, Michael
(86) Internationale Anmeldenummer: PCT/EP2009/063403
(87) Internationale Veröffentlichungsnummer: WO 2010/043648

(56) Entgegenhaltungen:
- WO-A-2007/093518
- US-A- 5 726 220
- US-A1- 2005 151 296
- XING P ET AL: "MISCIBILITY AND CRYSTALLIZATION OF POLY(BETA-HYDROXYBUTYRATE)/ POLY(VINYL ACETATE-CO-VINYL ALCOHOL) BLENDS" MACROMOLECULES 2000, ACS, WASHINGTON, DC, US, Bd. 31, Nr. 20, 6. Oktober 1998 (1998-10-06), Seiten 6898-6907, XP000779625 ISSN: 0024-9297

## Beschreibung

Die Erfindung betrifft Mischungen zur Herstellung von biologisch abbaubaren Formkörpern auf Basis von aliphatischen Polyestern und in Wasser redispergierbaren Polymerpulvern, sowie Verfahren zur Herstellung von biologisch abbaubaren Formkörper mittels der genannten Mischungen, und deren Verwendung.

Aliphatische Polyester wie Polymilchsäure werden zur Herstellung von biologisch abbaubaren Formkörpern eingesetzt, beispielsweise von Folien für Verpackungen für die Nahrungsmittelindustrie. Polymilchsäure kann aber auch zu Fasern versponnen werden und findet damit Anwendung als Füllung für Kopfkissen, Teppichfasern und Kosmetiktüchern. Problematisch ist die Sprödigkeit von aliphatischen Polyestern.

In der WO 96/31561 A1 werden die unbefriedigenden Materialeigenschaften thematisiert, welche man beim Einsatz von aliphatischen Polyestern zur Herstellung von biologisch abbaubaren Formkörpern erhält. Es werden daher Mischungen auf Stärke basierend vorgeschlagen, welche noch mindestens ein weiteres Biopolymer enthalten, beispielsweise aromatische Polyester, Polyesteramide. Mischungen von Polymilchsäure mit Stärke, Weichmacher und einem thermoplastischen Polymer, wie Polyvinylalkohol oder Ethylen-Vinylalkohol-Copolymerisate, werden in der WO 98/40434 A1 vorgeschlagen. Die WO 2005/059031 schlägt vor, die Eigenschaften von Formkörpern auf Basis von Polymilchsäure mittels Zugabe eines vernetzbaren Schlagzähmodifiers zu verbessern. Als Schlagzähmodifier wird ein Ethylen-(Meth)acrylat-Copolymer vorgeschlagen, welches (Meth)acrylat-Einheiten mit Epoxygruppen enthält. Die US 2008/0188597 A1 beschreibt Mischungen zur Herstellung von biologisch abbaubaren Formkörpern, welche als biologisch abbaubare Komponente aliphatische Polyester, insbesondere Polymilchsäure, enthalten. Die aliphatischen Polyester werden zur Verbesserung der mechanischen Festigkeit mit einem Thermoplast mit relativ hoher Tg von ≥ 80°C, beispielsweise Polystyrol oder PMMA, abgemischt. Zur Verbesserung der Flammhemmung wird eine organische Phosphorsäure zugegeben. In der WO 2006/074815 A1 wird vorgeschlagen, zur Verbesserung der Eigenschaften der Endprodukte und zur Vermeidung der aufwendigen Vortrocknung von Polymilchsäure, vor deren thermoplastischen Verarbeitung, aliphatische Polyester wie Polymilchsäure im Gemisch mit aliphatisch-aromatischen Polyestern einzusetzen und insbesondere noch Epoxidvernetzer, wie epoxyfunktionelle Polymere oder Bisphenol-A-Epoxide, einzusetzen. In der US 5,726,220 wird vorgeschlagen biologisch abbaubare Formkörper aus einem Gemisch von Polymilchsäure mit Ethylen-Vinylacetat-Copolymer herzustellen.

Problematisch bei der Abmischung von Polymilchsäure mit weiteren, flexibleren Biopolyestern und/oder Thermoplasten ist die unbefriedigende Mischbarkeit der einzelnen Komponenten.

Es bestand daher die Aufgabe, Massen auf Basis von aliphatischen Polyestern, insbesondere Polymilchsäure, zur Verfügung zu stellen, welche sich sowohl durch gute Verarbeitbarkeit auszeichnen, als auch durch verbesserte mechanische Eigenschaften.

Überraschenderweise wurde gefunden, dass in Wasser redispergierbare Polymerpulver mit aliphatischen Polyestern ausgezeichnet mischbar sind, und auch kompatibel sind zu Mischungen von Polymilchsäure mit weiteren Biopolyestern (aliphatische Polyester, aliphatisch-aromatische Polyester), sowie die mechanischen Eigenschaften von Formkörper auf Basis von Biopolyestern verbessern.

Gegenstand der Erfindung sind Mischungen zur Herstellung von biologisch abbaubaren Formkörpern auf Basis von einem oder mehreren aliphatischen Polyestern, dadurch gekennzeichnet, dass die Mischungen noch ein oder mehrere in Wasser redispergierbare Polymerpulver enthalten.

Geeignete aliphatische Polyester sind beispielsweise Polymilchsäure (PLA), Polyhydroxyfettsäuren (Polyhydroxyalkanoate) wie Poly-3-Hydroxybutansäure (PHB), Polyalkylensuccinate oder Polyalkylenadipate von C₂- bis C₆-Alkylenen, beispielweise Polybutylensuccinat oder Polybutylenadipat. Bevorzugt wird Polymilchsäure. Unter Polymilchsäure werden dabei Homopolymere von L-Milchsäure, von D-Milchsäure oder von racemischen Gemischen von L- und D-Milchsäure verstanden. Unter Polymilchsäure werden auch Copolymerisate verstanden, welche neben den Milchsäureeinheiten noch weitere Comonomereinheiten enthalten. Beispielsweise Milchsäurecopolymerisate mit Hydroxybuttersäure-, Caprolacton- und/oder Glykolsäure-Einheiten. Der Anteil der Comonomereinheiten beträgt dabei < 50 Mol-%, vorzugsweise < 10 Mol-%.

Die genannten aliphatische Polyester können mittels bekannter Polymerisationsverfahren, beispielsweise Polykondensation oder Ringöffnungspolymerisation, oder mittels bekannter mikrobiologischer Verfahren hergestellt werden (Ullmanns Encyclopedia of Industrial Chemistry, 7th Edition, Online Version, DOI 10.1002/14356007). Polymilchsäure ist im Handel beispielsweise als NatureWorks^{R} PLA erhältlich. Polyhydroxybuttersäure ist im Handel als Biomer^{R} Polyesters erhältlich.

Es wurde gefunden, dass die in Wasser redispergierbaren Polymerpulver auch die Abmischung von Polymilchsäure mit weiteren aliphatischen Polyestern oder aliphatisch-aromatischen Polyestern ermöglichen. Die erfindungsgemäße Mischung umfasst daher vorzugsweise neben Mischungen von Polymilchsäure mit in Wasser redispergierbaren Polymerpulvern, auch Zusammensetzungen mit Gemischen von Polymilchsäure mit weiteren aliphatischen Polyestern und in Wasser redispergierbaren Polymerpulvern, und Gemische von Polymilchsäure mit aliphatisch-aromatischen Polyestern, gegebenenfalls von Polymilchsäure verschiedenen aliphatischen Polyestern, und von in Wasser redispergierbaren Polymerpulvern. Geeignete aliphatisch-aromatische Polyester sind beispielsweise die in der WO 2006/074815 A1 genannten teilaromatischen Polyester. Ein derartiges Produkt ist als EastarBio^{R} im Handel erhältlich. Die Mischungen können neben den genannten Biopolyestern auch Biopolymere wie Stärken, Proteine oder Celluloseester enthalten. Vorzugsweise enthalten die Mischungen keine Stärke.

Als in Wasser redispergierbare Polymerpulver bezeichnet man Pulverzusammensetzungen, welche mittels Trocknung der entsprechenden wässrigen Dispersionen der Basispolymerisate in Gegenwart von Schutzkolloiden zugänglich werden. Aufgrund dieses Herstellungsprozesses wird das feinteilige Harz der Dispersion mit einem wasserlöslichen Schutzkolloid ausreichender Menge umhüllt. Bei der Trocknung wirkt das Schutzkolloid wie ein Mantel, welcher das Zusammenkleben der Teilchen verhindert. Beim Redispergieren in Wasser löst sich das Schutzkolloid wieder in Wasser und es liegt eine wässrige Dispersion der ursprünglichen Polymerteilchen vor (Schulze J. in TIZ, No. 9, 1985).

Geeignete Polymerisate sind solche auf der Basis von einem oder mehreren Monomeren aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren.

Geeignete Vinylester sind solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Monomeren aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0.1 bis 5 Gew.-%, bezogen auf das Gesamtgewicht des Monomergemisches, Hilfsmonomere copolymerisiert werden. Bevorzugt werden 0.5 bis 2.5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure-und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Die Monomerauswahl bzw. die Auswahl der Gewichtsanteile der Comonomere erfolgt dabei so, dass im allgemeinen eine Glasübergangstemperatur Tg von ≤ 120°C, vorzugsweise -40°C bis +80°C, besonders bevorzugt -20°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Bevorzugt werden Homo- oder Mischpolymerisate, welche ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten. Besonders bevorzugt werden Mischpolymerisate mit Vinylacetat und Ethylen; mit Vinylacetat, Ethylen und einem Vinylester von α-verzweigten Monocarbonsäuren mit 9 bis 11 C-Atomen; mit n-Butylacrylat und 2-Ethylhexylacrylat und/oder Methylmethacrylat; mit Styrol und einem oder mehreren Monomeren aus der Gruppe Methylacrylat, Ethylacrylat, Propylacrylat, n-Butylacrylat, 2-Ethylhexylacrylat; mit Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen; mit 1,3-Butadien und Styrol und/oder Methylmethacrylat sowie gegebenenfalls weiteren Acrylsäureestern; wobei die genannten Gemische gegebenenfalls noch ein oder mehrere der obengenannten Hilfsmonomere enthalten können.

Die Herstellung der Polymerisate erfolgt nach dem Emulsionspolymerisationsverfahren oder nach dem Suspensionspolymerisationsverfahren in Gegenwart von Schutzkolloiden, vorzugsweise nach dem Emulsionspolymerisationsverfahren, wobei die Polymerisationstemperatur im allgemeinen 20°C bis 100°C, vorzugsweise 60°C bis 90°C beträgt, und bei der Copolymerisation von gasförmigen Comonomeren wie Ethylen auch unter Druck, im allgemeinen zwischen 5 bar und 100 bar, gearbeitet werden kann. Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind Natriumpersulfat, Wasserstoffperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.01 bis 0.5 Gew.-%, bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind beispielsweise Natriumsulfit, Natriumhydroxymethansulfinat und Ascorbinsäure. Die Reduktionsmittelmenge beträgt vorzugsweise 0.01 bis 0.5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Zur Stabilisierung des Polymerisationsansatzes werden Schutzkolloide, gegebenenfalls in Kombination mit Emulgatoren, eingesetzt. Geeignete Schutzkolloide sind teilverseifte oder vollverseifte Polyvinylalkohole; Polyvinylpyrrolidone; Polyvinylacetale; Polysaccharide in wasserlöslicher Form wie Stärken (Amylose und Amylopectin) oder Dextrine oder Cyclodextrine, Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)-acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte oder vollverseifte Polyvinylalkohole. Besonders bevorzugt sind teilverseifte Polyvinylalkohole mit einem Hydrolysegrad von 80 bis 95 Mol% und einer Höpplerviskosität in 4 %-iger wässriger Lösung von 1 bis 30 mPas (Methode nach Höppler bei 20°C, DIN 53015).

Nach Abschluss der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen haben einen Feststoffgehalt von 30 bis 75 Gew.-%, vorzugsweise von 50 bis 60 Gew.-%.

Zur Herstellung der in Wasser redispergierbaren Polymerpulver-Zusammensetzungen werden die Dispersionen, gegebenenfalls nach Zusatz von weiteren Schutzkolloiden als Trocknungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt. Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

In der Regel wird die Trocknungshilfe in einer Gesamtmenge von 0.5 bis 30 Gew.-%, bezogen auf die polymeren Bestandteile der Dispersion, eingesetzt. Das heißt die Gesamtmenge an Schutzkolloid vor dem Trocknungsvorgang soll mindestens 1 bis 30 Gew.-%, bezogen auf den Polymeranteil betragen; bevorzugt werden 5 bis 20 Gew.-% bezogen auf den Polymeranteil eingesetzt.

Geeignete Trocknungshilfen sind dem Fachmann bekannt und sind beispielsweise die bereits genannten Schutzkolloide. Besonders bevorzugt sind teilverseifte Polyvinylalkohole mit einem Hydrolysegrad von 80 bis 95 Mol% und einer Höpplerviskosität in 4 %-iger wässriger Lösung von 1 bis 30 mPas (Methode nach Höppler bei 20°C, DIN 53015).

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise 1 bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline wie Metakaolin, Silicate mit Teilchengrößen vorzugsweise im Bereich von 10 nm bis 10 µm.

Am meisten bevorzugt werden Redispersionspulver-Zusammensetzungen enthaltend Vinylacetat-Homopolymerisate, oder Mischpolymerisate mit Vinylacetat und Ethylen, oder Mischpolymerisate mit Vinylacetat, Ethylen und einem Vinylester von α-verzweigten Monocarbonsäuren mit 9 bis 11 C-Atomen als filmbildendem Polymerisat und teilverseiftem Polyvinylalkohol als Schutzkolloid.

Besonders vorteilhaft ist oftmals der Einsatz von Gemischen von in Wasser redispergierbaren Polymerpulvern mit relativ niederer Tg von -20°C bis +20°C, beispielsweise solchen auf Basis von Mischpolymerisaten von Vinylacetat und Ethylen, mit in Wasser redispergierbaren Polymerpulvern mit relativ hoher Tg von +30°C bis +60°C, beispielsweise solchen auf Basis von Vinylacetat-Homopolymerisat. Während mit dem Polymerpulver relativ niederer Tg die Flexibilität der Formkörper optimiert werden kann, wird mit dem Polymerpulver relativ hoher Tg die Festigkeit der Formkörper optimiert.

Die redispergierbaren Polymerpulver können auch im Gemisch mit herkömmlichen, nicht redispergierbaren Thermoplasten (Thermoplast) eingesetzt werden. Beispiele für herkömmliche Thermoplaste sind Polyethylen, Polypropylen, PVC, ABS, Polyvinylacetat-Festharz. Der Gewichtsanteil dieser Thermoplasten sollte im Gemisch mit dem redispergierbaren Polymerpulver vorzugsweise 70 Gew.-% nicht überschreiten. Gegebenenfalls kann das redispergierbare Polymerpulver auch im Gemisch mit Vernetzern eingesetzt werden. Beispiele hierfür sind Epoxidvernetzer wie Epicote oder Isocyanat-Vernetzer.

Der Anteil der in Wasser redispergierbaren Polymerpulver in der Mischung zur Herstellung von biologisch abbaubaren Formkörpern beträgt 1 bis 95 Gew.-%, vorzugsweise 2 bis 50 Gew.-%, besonders bevorzugt 5 bis 40 Gew.-%, jeweils bezogen auf das Gesamtgewicht aus Biopolyester, sowie gegebenenfalls Biopolymer, und Redispersionspulver, sowie gegebenenfalls Thermoplast.

Gegebenenfalls können in dem Gemisch noch weitere, bei der thermoplastischen Verarbeitung von Kunststoffen übliche, Zusatzstoffe enthalten sein. Beispiele hierfür sind Farbstoffe, Pigmente, Stabilisatoren, Weichmacher, Gleitmittel und Flammschutzmittel. Im Allgemeinen beträgt die Menge an solchen Additiven bis zu 20 Gew.-%, vorzugsweise 1 bis 10 Gew.-%, jeweils bezogen auf das Gesamtgewicht der Mischung zur Herstellung von biologisch abbaubaren Formkörpern.

Bevorzugt werden auch Füllstoffe eingesetzt. Geeignete Füllstoffe sind anorganische und organische Füllstoffe. Beispiele für anorganische Füllstoffe sind Dolomit, Kreide, Quarzmehl. Bevorzugt werden organische Füllstoffe wie Holzmehl, insbesondere pflanzliche oder tierische Fasermaterialien wie Baumwoll-, Jute-, Holz-, Flachs-, Sisal-, Hanf-, Kokos- oder Lederfasern. Es können auch Kunstfasern wie Polyester- oder Polypropylen-Fasern verwendet werden. Die Füllstoffe werden im Allgemeinen in einem Gewichtsverhältnis Polymer : Füllstoff von 5 : 95 bis 100 : 0 eingesetzt, wobei der Polymeranteil sich aus dem Biopolyesteranteil, gegebenenfalls Biopolymeranteil, dem redispergierbaren Polymerpulveranteil und gegebenenfalls Thermoplastanteil, zusammensetzt.

Zur Herstellung der Formkörper werden die aliphatischen Polyester und die in Wasser redispergierbare Polymerpulver sowie gegebenenfalls weitere Zusatzstoffe, beispielsweise in einem Pulvermischer oder in einem Heißmischer, miteinander vermischt, und mittels der üblichen Umformungstechniken zu Formkörpern verarbeitet. Unter dem Begriff Formkörper wird das Verfahrensprodukt eines Formgebungsverfahrens, beispielsweise Pressen, Pelletieren, Granulieren, thermoplastische Umformungstechniken, verstanden. Beispiele für thermoplastische Umformungsverfahren sind Spritzgießverfahren, Spritzblasverfahren, Folienblasverfahren, Kalandrierverfahren, Extrudierverfahren. Vorzugsweise erfolgt die Verarbeitung mittels Extrusion mit entsprechender Entgasungszone und Spritzgiessen. Die Verarbeitungstemperatur beträgt im allgemeinen 60°C bis 200°C, vorzugsweise 90°C bis 160°C. Vorzugsweise wird bei erhöhtem Druck gearbeitet, vorzugsweise bei Drucken von 10 bis 600 bar abs. Die Herstellung der Formkörper kann auch über die Granulatstufe erfolgen.

Überraschenderweise hat sich gezeigt, dass bei der Verwendung von in Wasser redispergierbaren Polymerpulver bei der thermoplastischen Verarbeitung keine Vortrocknung der Biopolyester und gegebenenfalls der Biopolymere erforderlich ist, da der bei der Verarbeitung freiwerdende Wasserdampf von dem in Wasser redispergierbaren Polymerpulver gebunden wird. Die Herstellung von Formkörper wird mit dem erfindungsgemäßen Verfahren daher erheblich erleichtert.

Die Verfahrensprodukte eignen sich zur Verwendung als biologisch abbaubare Formkörper. Zur Verwendung als kompostierbare Verpackungsmaterialien, beispielsweise Folien, geschäumte Füllmaterialien, Behälter wie Tüten, Flaschen, Dosen, Tuben, Blisterverpackungen. Zur Verwendung in kompostierbaren Cateringprodukten wie kompostierbares Geschirr, Besteck, Trinkgefäße, Trinkhalme. Im Garten- und Landschaftsbau können die Verfahrensprodukte als kompostierbare Produkte wie als Mulchfolie, als Pflanz- und Anzuchttöpfe eingesetzt werden. Verwendungen als kompostierbare Produkte im Medizinbereich sind die als Kapsel- und Pillenmaterial, chirurgisches Nahtmaterial, resorbierbare Implantate. Eine Verwendung als kompostierbare Produkte im Campingbereich ist die zur Herstellung von kompostierbaren Zeltheringen.

Mit den erfindungsgemäßen Abmischungen lässt sich das Anwendungsspektrum von aliphatischen Polyestern signifikant erweitern. Polymilchsäure (PLA) lässt sich mit den auf dem Markt erhältlichen flexibleren Biopolyestern wie teilaromatischen Polyestern oder Polyhydroxybuttersäure normalerweise nur schwierig verarbeiten. Durch Zugabe von in Wasser redispergierbaren Polymerpulvern kann die Kompatibilität von PLA und anderen Biopolyestern verbessert werden.

Die nachfolgenden Beispiele dienen der weiteren Erläuterung der Erfindung:
Zur Testung wurden folgende Bestandteile eingesetzt:
   Redispergierbares Polymerpulver 1 (RDP 1):
      Vinnex^{R} 2510: Ein in Wasser redispergierbares Polymerpulver auf Basis eines mit teilverseiftem Polyvinylalkohol stabilisierten Vinylacetat-Homopolymers mit einer Tg von 43°C.
   Redispergierbares Polymerpulver 2 (RDP 2):
      Vinnex^{R} 2504: Ein in Wasser redispergierbares Polymerpulver auf Basis eines mit teilverseiftem Polyvinylalkohol stabilisierten Vinylacetat-Ethylen-Copolymers mit einer Tg von -4°C.
   Biopolymer 1 (Biol):
      NatureWorks^{R} PLA Polymer 2002D: Polymilchsäure der Fa. Nature-Works
   Biopolymer 2 (Bio2):
      Eastar^{R}Bio: Aliphatisch-aromatischer Copolyester der Fa. Novamont
   Gleitmittel (GM):
      Calciumstaerat Caesit 1 der Fa. Bärlocher

Mit den in Tabelle 1 und Tabelle 2 angegebenen Rezepturen wurden bei den in den Tabellen angegebenen Walzentemperatur Walzfelle hergestellt, bei den in den Tabellen angegebenen Temperaturen abgenommen, und zu Platten mit einer Dicke je nach Normanforderung gepresst.

Die Schmelzverhalten (Film) wurde visuell beurteilt. Die Dichte wurde gemäß DIN 53479 bestimmt. Die Shore-Härte D wurde gemäß DIN 53505 ermittelt.

Die Viskosität der eingesetzten Mischungen wurde mittels Hochkapillar-Viskosimetrie (Düse: 30x2) bei einer Schergeschwindigkeit von 100 s⁻¹ und bei einer Temperatur von 150°C (Visko1) und 170°C (Visko2) gemessen. Die mechanische Festigkeit wurde mittels Zugversuch gemäß DIN EN ISO 527 bestimmt, und die Zugspannung bei Bruch (ZSB) gemessen.

Die Härte der Formkörper wurde als Vicat A gemäß DIN EN ISO 306 mit einem Gewicht von 1019 g bestimmt. Zur Beurteilung der Schlagzähigkeit (SZ) wurde gemäß DIN EN ISO 179-leU das Bruchbild gemessen.

**Tabelle 1:**

| | Vbsp. 1 | Bsp.1 | Vbsp.2 | Bsp.2 | Bsp.3 | Vbsp.3 | Bsp.4 | Vbsp.4 | Bsp.5 | Bsp.6 |
|---|---|---|---|---|---|---|---|---|---|---|
| | | | | | | | | | | |
| Bio 1 [GewT] | 100 | 90 | 90 | 90 | 70 | 70 | 70 | 50 | 50 | 50 |
| RDP 1 [GewT] | | 10 | | | 30 | | | | 50 | |
| Bio 2 [GewT] | | | 10 | | | 30 | | 50 | | |
| RDP 2 [GewT] | | | | 10 | | | 30 | | | 50 |
| GM [GewT] | 0,5 | 0,5 | 0,5 | 0,5 | 0,5 | 0,5 | 0,5 | 0,5 | 0,5 | 0,5 |
| | | | | | | | | | | |
| Walze [°C] | 140 | 170 | 170 | 170 | 170 | 170 | 170 | 170 | 170 | 170 |
| Abnahme [°C] | 140 | 140 | 120 | 140 | 140 | 120 | 140 | 80 | 140 | 140 |
| Platte [°C] | 140 | 140 | 140 | 140 | 140 | 140 | 140 | 140 | 140 | 140 |
| Film | gut | gut | mittel | gut | gut | mittel | gut | schlecht | gut | gut |
| | | | | | | | | | | |
| Dichte[g/cm] | 1,333 | 1,298 | 1, 323 | 1,322 | 1,269 | 1,292 | 1,300 | 1,215 | 1,245 | 1,275 |
| Shore D | 82,2 | 81,7 | 71,7 | 81,4 | 82,4 | 66,1 | 69,3 | n.m. | 81,4 | 47,1 |
| Visko1 [Pas] | 14496 | 12644 | 14585 | 14398 | 7469 | 6385 | 8103 | 547 | 5244 | 4927 |
| Visko2 [Pas] | 3355 | 1687 | 1954 | 2801 | 1539 | 619 | 2280 | n.m. | 1322 | 1922 |
| ZSB [MPa] | 51,63 | 43,94 | 28,76 | 91,33 | 57,1 | 3,64 | 19,7 | n.m. | 53,27 | 6, 33 |
| | | | | | | | | | | |
| Vicat [°C] | 155,7 | 153,2 | 155,2 | 149,5 | | 109,0 | 153,2 | | | 53 |
| SZ [kJ/m²] | 10,85 | 20,8 | 6,13 | 16,72 | | | 20,8 | | | |

**Tabelle 2:**

| | Vbsp.5 | Bsp.7 | Vbsp.6 | Bsp.8 | Vbsp.7 | Bsp.9 |
|---|---|---|---|---|---|---|
| | | | | | | |
| Bio 1 [GewT] | 93 | 93 | 95 | 95 | 98 | 98 |
| RDP 1 [GewT] | | | | | | |
| Bio 2 [GewT] | 7 | | 5 | | 2 | |
| RDP 2 [GewT] | | 7 | | 5 | | 2 |
| GM [GewT] | 0,5 | 0,5 | 0,5 | 0,5 | 0,5 | 0,5 |
| | | | | | | |
| Walze [°C] | 170 | 170 | 170 | 170 | 170 | 170 |
| Abnahme [°C] | 140 | 140 | 140 | 140 | 140 | 140 |
| | | | | | | |
| Dichte[g/cm] | 1,313 | 1,307 | 1,315 | 1,308 | 1,321 | 1,316 |
| Shore D | 80,0 | 80,8 | 79 | 83,0 | 81,8 | 82,8 |
| | | | | | | |
| Vicat [°C] | 155,0 | 154,2 | 154,9 | 152,6 | 156,0 | 157,0 |
| SZ [kJ/m²] | 16,7 | 17,82 | 16,11 | 19,37 | 11,37 | 15,92 |

Es konnte gezeigt werden, dass sich die Redispersionspulver sehr einfach in PLA einarbeiten lassen: Während ein Pulver aus PLA und Biopolyester in der Schmelze kein homogenes Walzfell ergibt (schon geringste Zugaben von einem flexiblen Biopolyester bewirken eine deutliche Zunahme von Inhomogenitäten, die sich nur durch starke Scherwirkung auflösen), entsteht mit Hilfe eines RD-Pulver in beliebiger Abmischung mit PLA immer ein homogenes Walzfell (Vergleich Film von Vbsp. 2 und Vbsp. 3 mit Bsp. 1 bis Bsp. 6). Die mechanischen Eigenschaften der Formkörper mit PLA und RDP sind deutlich besser als die der PLA/Biopolyester-Blends (Vergleich ZSB und SZ von Vbsp. 2 und Bsp. 1 sowie von Vbsp. 2 und Bsp. 2) . Die Endeigenschaften eines solchen Blends werden durch die Wahl des RD-Pulvers gesteuert (Vergleich ZSB Bsp. 5 und Bsp. 6).

Die redispergierbaren Polymerpulver können in deutlich höherer Menge mit PLA verschnitten werden als die Biopolyester (Biopolymere). Hier zeigt sich die hervorragende Kompatibilität der redispergierbaren Polymerpulver mit PLA. Die Zugspannung ZSB kann auf hohem Niveau gehalten werden, während die Zugspannung bei hohen Gehalten an Biopolyester einbricht oder nicht mehr messbar ist (Vergleich Beispiele 3 und 4 mit Vergleichsbeispiel 3, und Vergleich Beispiele 5 oder 6 mit Vergleichsbeispiel 4).

## Patentansprüche

1. Mischungen zur Herstellung von biologisch abbaubaren Formkörpern auf Basis von einem oder mehreren aliphatischen Polyestern, **dadurch gekennzeichnet, dass** die Mischungen noch ein oder mehrere in Wasser redispergierbare Polymerpulver enthalten.

2. Mischungen nach Anspruch 1, **dadurch gekennzeichnet, dass** als aliphatische Polyester ein oder mehrere aus der Gruppe Polymilchsäure, Polyhydroxyfettsäuren, Polyalkylensuccinate und Polyalkylenadipate von C₂- bis C₆-Alkylenen, enthalten sind.

3. Mischungen nach Anspruch 1 oder 2, **dadurch gekennzeichnet, dass** die Mischungen Polymilchsäure und in Wasser redispergierbares Polymerpulver enthalten; oder Polymilchsäure und mindestens einen weiteren aliphatischen Polyester und in Wasser redispergierbares Polymerpulver enthalten; Polymilchsäure und mindestens einen aliphatisch-aromatischen Polyester, und gegebenenfalls mindestens einen von Polymilchsäure verschiedenen aliphatischen Polyester und in Wasser redispergierbares Polymerpulver enthalten.

4. Mischungen nach Anspruch 1 bis 3, **dadurch gekennzeichnet, dass** die Mischungen noch mindestens ein Biopolymer aus der Gruppe der Stärken, Proteine und Celluloseester enthalten.

5. Mischungen nach Anspruch 1 bis 4, **dadurch gekennzeichnet, dass** als in Wasser redispergierbares Polymerpulver ein oder mehrere enthalten sind auf Basis der Vinylacetat-Homopolymerisate, der Mischpolymerisate mit Vinylacetat und Ethylen, der Mischpolymerisate mit Vinylacetat, Ethylen und einem Vinylester von α-verzweigten Monocarbonsäuren mit 9 bis 11 C-Atomen, jeweils mit teilverseiftem Polyvinylalkohol als Schutzkolloid.

6. Mischungen nach Anspruch 1 bis 5, **dadurch gekennzeichnet, dass** als in Wasser redispergierbares Polymerpulver Gemische enthalten sind von in Wasser redispergierbaren Polymerpulvern mit relativ niederer Tg von -20°C bis +20°C mit in Wasser redispergierbaren Polymerpulvern mit relativ hoher Tg von +30°C bis +60°C.

7. Verfahren zur Herstellung von biologisch abbaubaren Formkörpern mit Mischungen gemäß Anspruch 1 bis 6, wobei die aliphatischen Polyester und die in Wasser redispergierbare Polymerpulver sowie gegebenenfalls weitere Zusatzstoffe miteinander vermischt werden, und mittels thermoplastischen Umformungstechniken zu Formkörpern verarbeitet werden.

8. Verfahren zur Herstellung von biologisch abbaubaren Formkörpern gemäß Anspruch 7, wobei noch bei der thermoplastischen Verarbeitung von Kunststoffen übliche Zusatzstoffe eingesetzt werden.

9. Verfahren zur Herstellung von biologisch abbaubaren Formkörpern gemäß Anspruch 7 oder 8, wobei noch anorganische oder organische Füllstoffe eingesetzt werden.

10. Verwendung der Verfahrensprodukte nach Anspruch 7 bis 9 als biologisch abbaubare Formkörper.

11. Verwendung nach Anspruch 10 als kompostierbare Verpackungsmaterialien, als kompostierbare Cateringprodukte, als kompostierbare Produkte im Garten- und Landschaftsbau, als kompostierbare Produkte im Medizinbereich, als kompostierbare Produkte im Campingbereich.

## Claims

1. Mixtures for producing biodegradable moldings based on one or more aliphatic polyesters, **characterized in that** the mixtures further comprise one or more water-redispersible polymer powders.

2. Mixtures according to Claim 1, **characterized in that** said aliphatic polyesters comprise one or more from the group consisting of polylactic acid, polyhydroxy fatty acids, polyalkylene succinates, and polyalkylene adipates of C₂ to C₆ alkylenes.

3. Mixtures according to Claim 1 or 2, **characterized in that** the mixtures comprise polylactic acid and water-redispersible polymer powder; or polylactic acid and at least one other aliphatic polyester, and water-redispersible polymer powder; polylactic acid and at least one aliphatic-aromatic polyester, and optionally at least one aliphatic polyester other than polylactic acid, and water-redispersible polymer powder.

4. Mixtures according to Claim 1 to 3, **characterized in that** the mixtures further comprise at least one biopolymer from the group consisting of starches, proteins, and cellulose esters.

5. Mixtures according to Claim 1 to 4, **characterized in that** said water-redispersible polymer powder comprises one or more powders based on vinyl acetate homopolymers, copolymers with vinyl acetate and ethylene, copolymers with vinyl acetate, ethylene, and a vinyl ester of α-branched monocarboxylic acids having 9 to 11 C atoms, in each case with partially hydrolyzed polyvinyl alcohol as protective colloid.

6. Mixtures according to Claim 1 to 5, **characterized in that** said water-redispersible polymer powder comprises mixtures of water-redispersible polymer powders having a relatively low Tg of -20°C to +20°C with water-redispersible polymer powders having a relatively high Tg of +30°C to +60°C.

7. Method for producing biodegradable moldings with mixtures according to Claim 1 to 6, the aliphatic polyesters and the water-redispersible polymer powders and also, optionally, further additives being mixed with one another, and being processed into moldings by means of thermoplastic forming techniques.

8. Method for producing biodegradable moldings according to Claim 7, additives customary in the thermoplastic processing of plastics additionally being used.

9. Method for producing biodegradable moldings according to Claim 7 or 8, inorganic or organic fillers additionally being used.

10. Use of the method products according to Claim 7 to 9 as biodegradable moldings.

11. Use according to Claim 10 as compostable packaging materials, as compostable catering products, as compostable products in horticulture and landscaping, as compostable products in the medical sector, as compostable products in the camping sector.

## Revendications

1. Mélanges pour la production de corps moulés biologiquement dégradables à base d'un ou plusieurs polyesters aliphatiques, **caractérisés en ce que** les mélanges contiennent encore une ou plusieurs poudres de polymères redispersables dans l'eau.

2. Mélanges selon la revendication 1, **caractérisés en ce qu'**en tant que polyesters aliphatiques sont contenus un ou plusieurs composés choisis dans le groupe constitué par le poly(acide lactique), des poly(acide gras hydroxylé)s, des polyalkylènesuccinates et des polyalkylène-adipates d'alkylènes en C₂-C₆.

3. Mélanges selon la revendication 1 ou 2, **caractérisés en ce que** les mélanges contiennent du poly(acide lactique) et une poudre de polymère redispersable dans l'eau ; ou du poly(acide lactique) et au moins un autre polyester aliphatique et une poudre de polymère redispersable dans l'eau ; du poly(acide lactique) et au moins un polyester aliphatique-aromatique, et éventuellement au moins un polyester aliphatique différent du poly(acide lactique), et une poudre de polymère redispersable dans l'eau.

4. Mélanges selon l'une quelconque des revendications 1 à 3, **caractérisés en ce que** les mélanges contiennent encore au moins un biopolymère choisi dans le groupe des amidons, protéines et esters de cellulose.

5. Mélanges selon l'une quelconque des revendications 1 à 4, **caractérisés en ce qu'**en tant que poudre de polymère redispersable dans l'eau sont contenues une ou plusieurs poudres à base des homopolymérisats d'acétate de vinyle, des copolymérisats d'acétate de vinyle et d'éthylène, des copolymérisats d'acétate de vinyle, d'éthylène et d'un ester vinylique d'acides monocarboxyliques α-ramifiés, ayant de 9 à 11 atomes de carbone, à chaque fois avec un poly(alcool vinylique) partiellement saponifié en tant que colloïde protecteur.

6. Mélanges selon l'une quelconque des revendications 1 à 5, **caractérisés en ce qu'**en tant que poudre de polymère redispersable dans l'eau sont contenus des mélanges de poudres de polymères redispersables dans l'eau à relativement basse Tg de -20 °C à +20 °C et de poudres de polymères redispersables dans l'eau à relativement haute Tg de +30 °C à +60 °C.

7. Procédé pour la production de corps moulés biologiquement dégradables avec des mélanges selon l'une quelconque des revendications 1 à 6, dans lequel on mélange entre eux les polyesters aliphatiques et les poudres de polymères redispersables dans l'eau ainsi qu'éventuellement d'autres additifs, et on les transforme en corps moulés au moyen de techniques thermoplastiques de mise en forme.

8. Procédé pour la production de corps moulés biologiquement dégradables selon la revendication 7, dans lequel on utilise encore des additifs usuels dans la transformation thermoplastique de matières plastiques.

9. Procédé pour la production de corps moulés biologiquement dégradables selon la revendication 7 ou 8, dans lequel on utilise encore des charges organiques ou inorganiques.

10. Utilisation des produits du procédé selon l'une quelconque des revendications 7 à 9, en tant que corps moulés biologiquement dégradables.

11. Utilisation selon la revendication 10, en tant que matériaux d'emballage compostables, en tant que produits de restauration compostables, en tant que produits compostables en horticulture et agriculture, en tant que produits compostables dans le secteur médical, en tant que produits compostables dans le secteur du camping.
